# EUROPÄISCHE PATENTSCHRIFT

(11) **EP 1 169 873 B1**
(45) Veröffentlichungstag und Bekanntmachung des Hinweises auf die Patenterteilung: **29.10.2003**
(21) Anmeldenummer: 99944220.5
(22) Anmeldetag: 29.09.1999
(51) Int. Cl.: H04Q 7/22, H04L 29/06

(54) **VERFAHREN UM MITGLIEDER EINER GEMEINSAMEN INTERESSENGRUPPE ZU FINDEN**
METHOD FOR FINDING MEMBERS OF A COMMON INTEREST GROUP
PROCEDE PERMETTANT DE TROUVER DES MEMBRES D'UN MEME GROUPE D'INTERET

(43) Veröffentlichungstag der Anmeldung: 09.01.2002
(73) Patentinhaber: Swisscom Mobile AG, 3050 Bern (CH)
(72) Erfinder: CABANO, Claudio, CH-3006 Bern (CH); PERELS, David, CH-8005 Zürich (CH); HUBER, Adriano, CH-6600 Locarno (CH)
(74) Vertreter: Saam, Christophe
(86) Internationale Anmeldenummer: CH9900463
(87) Internationale Veröffentlichungsnummer: WO01024551

(56) Entgegenhaltungen:
- EP-A- 0 717 545
- EP-A- 0 905 956
- WO-A-00/22860
- WO-A-97/41654
- FR-A- 2 615 957

## Beschreibung

Die vorliegende Erfindung betrifft ein Verfahren, mit welchem Benutzer von Endgeräten Mitglieder gemeinsamer Interessengruppen finden können.

Es sind schon unter den Namen "Lovegetty" persönliche tragbare Endgeräte bekannt, welche die Selektion eines benutzerspezifischen Parameters, beispielsweise einer Farbe, erlauben, und die einen Ton erzeugen wenn sich ein anderes Gerät in welchem der gleiche Parameter selektiert wurde in der Nähe befindet. Solche Endgeräte werden als Spielzeug verwendet und erlauben nur eine Selektion von Parametern (zB:Farben) innerhalb einer sehr begrenzten vordefinierten und im Endgerät gespeicherten Liste.

Ein "Lovegetty"-ähnliches Gerät ist in der Patentanmeldung FR2615957 beschrieben. Dieses Gerät erlaubt eine Selektion von persönlichen Daten in einer vom Hersteller zur Verfügung gestellten Liste.

Ausserdem sind sogenannte Newsgroups im Internet bekannt, in welchen Internet-Benutzer mit gemeinsamen Interessen Meldungen senden und erhalten können. Weltweit gibt es Tausende von aktiven Newsgroups für fast alle denkbaren Interessen, so dass es möglich ist, weltweit Internet-Benutzer mit sehr ähnlichen Interessen zu suchen und zu finden. Da jedoch viele Internet-Benutzer anonym bleiben, sind solche Newsgroups kaum geeignet, um Personen mit gemeinsamen Interessen und/oder Bedürfnissen physisch zu treffen.

Ein Ziel der Erfindung ist es, ein Verfahren vorzuschlagen, mit welchem Mitglieder einer gemeinsamen Interessengruppe gefunden werden können.

Gemäss der vorliegenden Erfindung werden diese Ziele insbesondere durch die Merkmale der unabhängigen Ansprüche erreicht. Weitere vorteilhafte Ausführungsformen gehen ausserdem aus den abhängigen Ansprüchen und der Beschreibung hervor.

Insbesondere werden diese Ziele dadurch erreicht, dass mindestens eine Datenbank gebildet wird, in welcher eine Vielzahl von Interessengruppen gespeichert sind, wobei diese Interessengruppen Benutzer von Endgeräten umfassen, wobei die Datenbank in mindestens einem aus einem Funknetz erreichbaren Server abgelegt ist, und dass eine Meldung an mindestens einen Teilnehmer gesendet wird, wenn er sich in der Nähe eines anderen Mitglieds einer gemeinsamen Interessengruppe befindet.

Dies hat den Vorteil, dass Mitglieder, die in einer Interessengruppe registriert sind, informiert werden, sobald sich andere Mitglieder dieser Interessengruppe in der Umgebung befinden.

In einer Variante wird der Standort aller in einer Interessengruppe registrierten Mitglieder kontinuierlich von einem Server überwacht, der gemäss vordefinierten Kriterien jedes Mal eine Meldung sendet, wenn sich zwei Mitglieder einer gemeinsamen Interessengruppe in der Nähe voneinander befinden.

In einer anderen Variante verfügen mindestens gewisse Mobilgeräte über eine kontaktlose Schnittstelle im Nahbereich und suchen selbst nach anderen Geräten von Mitgliedern gemeinsamer Interessengruppen im Erreichbarkeitsgebiet.

Im Folgenden werden anhand der beigefügten Zeichnung bevorzugte Ausführungsbeispiele der Erfindung näher beschrieben. Es zeigt:

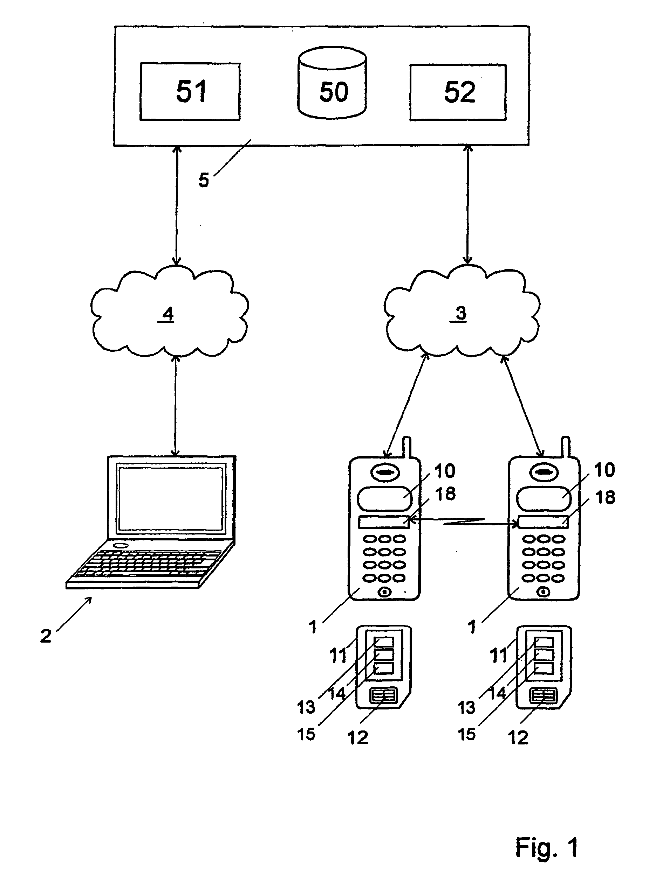

Die Figur 1, ein Beispiel eines Systems, in welchem das erfindungsgemässe Verfahren angewendet werden kann.

Obwohl diese Erfindung in mehr Details den speziellen Fall der Ausführung in einem GSM-Mobilfunknetz beschreibt, wird der Fachmann verstehen, dass dieses Verfahren auch mit anderen Typen von Funknetzen, beispielsweise mit AMPS, TDMA, CDMA, TACS, PDC, HSCCD, GPRS, EDGE oder UMTS-Mobilfunknetzen, oder mit Pager-Systemen, oder auch in einem kontaktlosen-LAN oder in einem lokalen Netz gemäss Bluetooth eingesetzt werden kann. Ausserdem kann das erfindungsgemässe Verfahren auch in einem Broadcast-Funknetz, beispielsweise mit Radio- und/oder Video-Empfängern, beispielsweise DAB oder DVB-Empfänger (Digital Audio Broadcasting beziehungsweise Digital Video Broadcasting), eingesetzt werden.

Die Figur 1 zeigt in schematischer Weise ein Funknetz 3, in welchem verschiedene Mobilgeräte 1 angemeldet sind. Die Mobilgeräte 1 sind vorzugsweise WAP-fähige Mobilfunkgeräte (Wireless Application Protocol) oder MeXE-Geräte und umfassen vorzugsweise ein bekanntes Funkteil, eine Anzeige 10, und bekannte Eingabe- und Wiedergabemittel. Ein Identifizierungsmodul 11, beispielsweise eine SIM oder WIM-Karte (Subscriber Identification Module beziehungsweise WAP Identification Module) ist vorzugsweise über ein Kontaktgebiet 12 mit dem Endgerät 1 verbunden und enthält einen Prozessor, in welchem benutzerspezifische Daten abgelegt sind. Wie später erläutert umfassen diese Daten, ausser bekannten GSM- und/oder WAP-Daten, folgende Angaben:
■ Angaben 13 über die Interessengruppe, in welcher der Endgerät-Benutzer registriert ist,
■ Eventuell ein oder mehrere von Drittparteien erteilte Zertifikate 14 für die Authentisierung der Zugehörigkeit zu bestimmten Interessengruppen
■ Ein Zertifikat 15 für die Authentisierung des Endgerätbenutzers im Mobilfunknetz.

Das Mobilgerät 1 kann auch in eine Armbanduhr, in eine Chipkarte oder in einen Schlüsselring integriert werden. In diesem Fall kann auf die Anzeige 10, auf die Karte 11 und auf den Sprachkommunikationsteil verzichtet werden. In einer Variante besteht das Mobilgerät aus einem Funkempfänger, beispielsweise aus einem DAB oder DVB-Funkempfänger.

Mindestens gewisse Mobilgeräte 1 umfassen ausserdem vorzugsweise eine kontaktlose Schnittstelle 18, die kontaktlose Verbindungen im Nahbereich (beispielsweise einige Meter oder einige hundert Meter) erlaubt. In einer bevorzugten Variante besteht die kontaktlose Schnittstelle aus einer Funkschnittstelle, beispielsweise aus einer Bluetooth-Schnittstelle oder aus einer induktiven Schnittstelle. In einer anderen Variante besteht die kontaktlose Schnittstelle aus einer infraroten Schnittstelle, beispielsweise gemäss dem IrdA-Protokoll. Die kontaktlose Schnittstelle kann beispielsweise in das Gehäuse des Mobilgeräts 1, in den (nicht dargestellten) Batteriesatz, in das Identifizierungsmodul 11 und/oder in ein (nicht dargestelltes) Zusatzmodul integriert werden, Jini-Komponenten (Warenzeichen von SUN) können ausserdem verwendet werden, um die Synchronisierung der Geräte die über die kontaktlose Schnittstelle kommunizieren zu gewährleisten.

Das System umfasst ausserdem mindestens ein Internet-Terminal 2, beispielsweise einen PC, ein Laptop, ein Mediaphon oder ein WAP fähiges Mobilfunktelefon, das dem Internet beziehungsweise WAP-Netz 4 angeschlossen ist.

Ein an das Mobilfunknetz 3 und vorzugsweise auch an das Internet 4 angeschlossener Server 5 enthält eine Datenbank 50, in welcher eine Vielzahl von Interessengruppen gespeichert sind. Jede Interestengruppe umfasst eine Liste von mittels Zertifikaten registrierten Mitgliedern und vorzugsweise eine Beschreibung, beispielsweise einen Gruppenhamen und/oder eine genauere Beschreibung der Interessengruppe.

Die Interessengruppen in der Datenbank 50 können vorzugsweise in einer Hierarchie organisiert werden. Auf diese Weise können beispielsweise verschiedene Gruppen in Zusammenschlüssen mit ähnlichen Interessen gruppiert werden, was die Recherche von relevanten Gruppen erleichtert und eine Suche von Partnern mit ähnlichen aber nicht identischen Interessen ermöglicht. Vorzugsweise kann jedes Mitglied durch verschiedene denkbare prozedurale Schritte neue Interessengruppen oder Zusammenschlüsse von Interessengruppen bilden, wobei die Herstellung und/oder die Verwaltung einer Interessengruppe verrechnet werden kann.

Der Server 5 umfasst ausserdem vorzugsweise Standortbestimmungsmittel 51, oder kann auf solche Standortbestimmungsmittel zugreifen. Die Standortbestimmungsmittel können Angaben über den Standort der Benutzer von Endgeräten 1 liefern. In einer ersten Variante bestehen diese Standortbestimmungsmittel einfach aus der Heimdatei HLR (Home Location Register) des Mobilfunknetzes 3, in welcher Angaben über die Zelle des Netzes vorhanden sind, in welcher der Benutzer sich momentan befindet. In einer anderen Variante wird der Benutzerstandort innerhalb einer Zelle auf Basis von Signalen von verschiedenen Basisstationen genauer ermittelt. In einer anderen Variante wird der Standort jedes Mobilgerätes 1 mit einem im Mobilgerät integrierten Standortbestimmungsmittel ermittelt, beispielsweise mit einem GPS-Empfänger (Global Positioning System).

Der Server 5 umfasst ausserdem eine Datenbank 52, in welcher Mitglieder- und/oder Interessengruppe-spezifische Sendekriterien abgelegt sind. Für jedes Mitglied wird in dieser Datenbank definiert, wann eine Meldung gesendet werden muss, beispielsweise ab welchem Abstand bis zum nächsten Mitglied jeder Interessengruppe oder welche Mitglieder ausgeschlossen sind.

Der Server 5 kann beispielsweise vom Betreiber des Mobilfunknetzes 3 verwaltet werden. in diesem Fall kann die Registrierung eines Mitglieds in einer Interessengruppe und/oder die Sendung einer Meldung vom benannten Betreiber verrechnet werden, beispielsweise mit der monatlichen Telefonrechnung oder durch Belastung eines Prepaid-Kontos auf dem Identifizierungsmodul 11 des Mitglieds. Ein Auftragscode kann auch mit bestimmten Interessengruppen verknüpft werden, damit die Registrierung einfach durchgeführt und mit dem in der Patentanmeldung WO9828900 beschriebenen Verfahren vom Manager dieser Gruppe verrechnet werden kann.

Der Server 5 kann aber auch von anderen Firmen verwaltet werden, die sich beispielsweise durch Abonnemente oder Werbung finanzieren und die die Angaben über den Benutzerstandort entweder direkt von entsprechend ausgerüsteten abonnierten Benutzern oder vom Betreiber des Mobilfunknetzes 3 bekommen.

Ausserdem kann das Verfahren auch international eingesetzt werden, indem mehrere Server 5, die beispielsweise von mehreren Betreibern in verschiedenen Ländern oder Regionen verwaltet werden, verbunden werden. In diesem Fall kann ein Mitglied andere Mitglieder gemeinsamer Interessengruppen auch dann finden, wenn es sich im Ausland befindet oder in einer Gegend, die von seinem Heimnetzbetreiber nicht abgedeckt wird. Angaben aus der Datenbank 50 und/oder 52 können ausserdem vermarktet werden, beispielsweise vom Informationsvermittler.

Wir werden jetzt das erfindungsgemässe Verfahren näher beschreiben.

Ein Endgerätbenutzer der anderen Mitglieder mit gemeinsamen Interessen finden will, muss zuerst in die für ihn relevanten Interessengruppen registriert werden.

Um sich selbst zu registrieren, kann der Benutzer eines Endgerätes in einer ersten Variante ein Verzeichnis von in der Datenbank 50 verfügbaren Gruppen auf der Anzeige 10 seines Mobilgerätes 1 abrufen und die für ihn interessanten Interessengruppen selektieren. Das Gruppenverzeichnis kann beispielsweise von WAP-Diensten zur Verfügung gestellt werden.

In einer anderen Variante kann der Benutzer eine Registrierungsmeldung, beispielsweise eine SMS- (Short Message System), USSD- (Unstructured Supplementary Service Datas), oder WAP-Meldung, ein GPRS-Paket oder ein E-Mail an den Server 5 senden. Die Registrierungsmeldung enthält in diesem Fall eine Interessengruppenidentifizierung, die beispielsweise durch Werbung bekannt gemacht wurde. Vorzugsweise wird diese Registrierungsmeldung vorzugsweise anhand des Zertifikats 15 und vorzugsweise im Identifizierungsmodul 11 signiert, damit der Server 5 die Identität des Benutzers und die Integrität der Meldung prüfen kann.

In einer anderen Variante kann sich der Benutzer mit einem Internet-Endgerät 2, beispielsweise mit einem PC, einem Laptop, einem Palmtop oder einem WAP-fähigen Mobilfunktelefon, in einer oder mehreren Interessengruppen registrieren.

In noch einer anderen Variante kann sich der Benutzer auch per Telefon (beispielsweise automatisch mit einer Sprachmeldung bei einem Sprachserver), per Fax, oder mit einem Brief in einer Interessengruppe registrieren lassen.

Vorzugsweise werden mindestens gewisse Interessengnippen von einem Manager betreut. Dieser Gruppenmanager kann vorzugsweise entscheiden, welche Benutzer sich in der Gruppe registrieren lassen dürfen. Vorzugsweise kann ein Gruppenmanager Mitglieder selbst in einer Gruppe registrieren. Auf diese Weise kann beispielsweise die Administration einer Schule oder einer Universität alle Studenten und ehemaligen Studenten, die ein Mobilgerät benutzen, in der Schulgruppe registrieren, um zukünftige Kontakte zwischen Studenten zu vereinfachen. Ebenso kann eine Firma alle Angestellten in einer Firmengruppe zusammenfassen.

Die Registrierung in einer Interessengruppe kann vorzugsweise vom Manager dieser Gruppe mit einem in der Datenbank 50 oder vorzugsweise im Identifizierungsmodul 11 gespeicherten elektronischen Zertifikat zertifiziert werden. Beispielsweise kann die Administration einer Schule ein Zertifikat an alle ehemaligen Studenten verteilen, damit sich diese ehemaligen Studenten zuverlässig als solche authentifizieren können.

Wenn die notwendigen Vertrauensbeziehungen bestehen, können auch von Drittparteien erzeugte Zertifikate verwendet werden.

Die Registrierung in einer Interessengruppe kann vorzugsweise zeitlich begrenzt werden, wobei die maximale Registrierungsdauer vom Manager jeder Gruppe und/oder vom Betreiber des Servers 5 definiert werden kann. Ist die Registrierung in einer bestimmten Gruppe kostenpflichtig, kann die verlangte Gebühr von der Registrierungsdauer abhängig sein.

Die Mitglieder einer Interessengruppe können vorzugsweise die Sendekriterien für Meldungen selbst bestimmen. Beispielsweise können sie bestimmen, wann ihnen Meldungen gesendet werden müssen. Diese Selektion kann vorzugsweise unabhängig für jede Gruppe gemacht werden und wird in der Datenbank 52 gespeichert.

Für jede Interessengruppe kann ein Mitglied beispielsweise bestimmen, dass es jedes Mal automatisch eine Meldung erhalten will, wenn sich ein anderes Mitglied dieser Gruppe in der Nähe befindet Für andere Gruppen kann es definieren, dass es Meldungen nur auf Anfrage und wenn es dies verlangt erhalten will. Andere Sendekriterien für Meldungen können auch zeitabhängig ("Ich will Meldungen nur tagsüber erhalten") und/oder standortabhängig ("Ich will nur wissen ob sich Firmenkollegen in der Nähe befinden wenn ich im Ausland bin") sein. Beispielsweise kann für bestimmte Interessengruppen und/oder für bestimmte Gruppenmitglieder definiert werden, dass eine Meldung nur dann gesendet werden muss, wenn sich die Mitglieder an vordefinierten Treffpunkten befinden, wobei die Interessengruppen auch von Betreibern dieser Treffpunkte (beispielsweise Warenhäuser, Bahnhöfe, Flughafen, Unterhaltungsorte, usw..) verwaltet werden können.

Die Sendekriterien können vorzugsweise vom Betreiber des Servers 5 und/oder vom Manager der Interessengruppe vordefiniert werden.

Ausserdem können die Sendekriterien in der Dätenbank 52 auch den maximalen Abstand zwischen Mitgliedern angeben, bis zu welchem eine Meldung gesendet werden muss. Dieser Abstand kann vorzugsweise vom Funknetzbetreiber, von den Gruppenmanagern und/oder von den Mitgliedern festgelegt werden.

Vorzugsweise können sich ausserdem Mitglieder nur temporär, beispielsweise nur für eine einmalige Personenrecherche, in einer bestehenden Gruppe anmelden. Umgekehrt können sich Mitglieder einer Gruppe temporär aus einer Gruppe abmelden, wenn sie keine Meldung mehr erhalten wollen und wenn sie auch nicht wollen, dass ihre Anwesenheit anderen Mitgliedern signalisiert wird. Vorzugsweise können Gruppenmanager dieses Recht sich temporär in einer Gruppe an- bzw. abzumelden einschränken.

Die Mitglieder können ausserdem ein Mitgliederprofil in der Datenbank 50 ablegen. Diese Datenbank enthält in diesem Fall Identifizierungsmerkmale, die eine Identifizierung der Mitglieder ermöglicht. Diese Merkmale können beispielsweise ein Bild des Teilnehmers sein, und/oder seine Haarfarbe, den Typ und die Farbe seines Autos, sein Autokennzeichnen, usw. umfassen. Vorzugsweise enthalten diese Merkmale ausserdem die Telefonnummer und/oder E-Mail Adresse des Mitglieds, damit ihn andere Mitglieder einer gemeinsamen Interessengruppe kontaktieren können. In einer weiter unten beschriebenen Variante umfassen diese Merkmale ausserdem eine Identifizierung des Mitglieds, die für eine Verbindung über eine kontaktlose Schnittstelle im Nahbereich verwendet werden kann. Beispielsweise kann diese Identifizierung für eine Kommunikation über eine Bluetooth-Schnittstelle verwendet werden.

Jedes Mitglied kann vorzugsweise bestimmen, welche Merkmale an andere Mitglieder einer gemeinsamen Interessengruppe gesendet werden dürfen. Beispielsweise kann ein Mitglied entscheiden, dass es gegenüber anderen Mitgliedern einer ersten gemeinsamen Interessengruppe anonym bleiben will, so dass diese lediglich die Meldung erhalten, dass sich ein Gruppenmitglied in der Nähe befindet. In einer zweiten Gruppe kann es angeben dass beispielsweise nur seine Telefonnummer kommuniziert werden darf, während an Mitglieder einer dritten Gruppe zusätzliche Identifizierungsmerkmale gesendet werden dürfen. In anderen Gruppen kann es beispielsweise nur ein Alias kommunizieren.

Wir werden jetzt eine erste Hauptvariante der Erfindung beschreiben.

In dieser ersten Variante erhält der Server 5 kontinuierlich Angaben von den Standortbestimmungsmittein 51 über den Standort aller angemeldeten Benutzer von Endgeräten 1. Ein geeignetes Programm im Server 5 prüft dann, ob bestimmte Sendekriterien in der Datenbank 52 erfüllt werden und ob sich Mitglieder gemeinsamer Interessengruppen in einem bestimmten Abstand voneinander befinden.

Je nach Sendekriterien wird dieser Test kontinuierlich für alle möglichen Paare von Mitgliedern durchgeführt, oder nur auf Anfrage, wenn ein Mitglied den Server S nach anderen Mitgliedern gemeinsamer Interessengruppen abfragt.

Wenn der Server 5 Sendekriterien findet die erfüllt werden, das heisst wenn sich zwei Mitglieder einer gemeinsamen Interessengruppe in der Nähe voneinander befinden, wird eine Meldung vorbereitet und an ein oder beide Mitglieder gesendet. Je nach Variante und/oder nach definierten Sendekriterien kann diese Meldung beispielsweise aus einer SMS- USSD, WAP, GPRS- oder E-Mail Meldung bestehen.

Als Alternative kann diese Meldung auch Ober ein Broadcast-Verfahren, beispielsweise als programmbegleitender Daten in einem DAB-Programm (Digital Audio Broadcasting) übertragen werden.

Das Mitglied, das eine Meldung erhalten hat welche die Anwesenheit eines anderen Mitglieds einer gemeinsamen Interessengruppe signalisiert, kann dann entscheiden ob es beispielsweise diese Meldung ablehnen will wenn es keinen Kontakt sucht, oder sich im Gegenteil telefonisch oder direkt mit dem anderen Mitglied in Verbindung setzen will. Für eine telefonische Verbindung kann das Mitglied die vorzugsweise in der Meldung enthaltene Telefonnummer und/oder E-Mail Adresse des anderen Mitglieds verwenden. In einer Variante kann ein Verzeichnis, beispielsweise ein WAP-Whitebook, verwendet werden, um die Telefonnummer oder E-Mail Adresse des anderen Mitglieds zu finden. Vorzugsweise kann diese Verbindung mit einem geeigneten Programm hergestellt werden, durch eine einfache Menu-Selektion und ohne dass der Meldungsempfänger die Telefonnummer wieder eingeben muss. Das geeignete Programm kann beispielsweise auch als Applet innerhalb der Meldung übertragen werden.

Falls sich das Mitglied direkt mit dem anderen Mitglied einer gemeinsamen Interessengruppe in Kontakt setzen will, kann es dieses mit den je nach Benutzereinstellungen in der Meldung enthaltenen Benutzermerkmalen, wie beispielsweise die Farbe des Autos und das Autokennzeichen, identifizieren.

Vorzugsweise verfügt das Mitglied aysserdem über einen Speicherbereich in seinem Identrfizierungsmodul 11 oder in seinem Endgerät 1, in welchem es diese Benutzermerkmale in ein Verzeichnis speichern kann.

Der Endgerät-Benutter, der eine Meldung vom Server 5 erhalten hat, dass sich ein anderes Mitglied einer gemeinsamen Interessengruppe in der Nähe befindet, kann sich auch direkt über die kontaktlose Schnittstelle im Nahbereich 18 mit diesem Mobilteilnehmer in Verbindung setzen. Vorzugsweise enthält die Meldung die vom Server 5 gesendet wurde jene Identifizierung der anderen Mitglieder, die für eine Datenübertragung über diese kontaktlose Schnittstelle notwendig ist.

Wenn die Zugehörigkeit zu einer Interessengruppe durch ein Zertifikat 14 zertifiziert wird, kann die Meldung zwischen den Mitgliedern vorzugsweise mit diesem Zertifikat signiert werden. Auf diese Weise kann jedes Mitglied die Authentizität der anderen Mitglieder prüfen.

Wir werden jetzt eine zweite Hauptvariante der Erfindung näher beschreiben.

In dieser zweiten Variante können mindestens gewisse Endgeräte 1 über die benannte kontaktlose Schnittstelle im Nahbereich nach anderen Mobilgeräten in der Umgebung suchen ("Poll-Abfrage"). Wenn ein anderes Gerät diese Abfrage beantwortet (automatisch oder nach einer Bestätigung des Benutzers) kann mit der Datenbank 50 geprüft werden, ob dieses andere Endgerät dem Mitglied einer gemeinsamen Interessengruppe gehört Wenn eine zusätzliche Sicherheit verlangt wird, kann auch das Zertifikat 14 des anderen Geräts im Identifizierungsmodul 11 geprüft werden. Wird auf diese Weise ein Mitglied einer gemeinsamen Interessengruppe gefunden und identifiziert, kann ihm eine Meldung über die benannte kontaktlose Schnittstelle und/oder über das Funknetz 3 gesendet werden.

Dieses Verfahren kann beispielsweise eingesetzt werden um Personen mit gemeinsamen Interessen zu finden, beispielsweise um ehemalige Studenten-Kollegen in einer fremden Stadt zu finden, um Mitspieler für ein Spiel zu finden, um Termine zu organisieren, um Kongress-Teilnehmer zu finden und zu authentifizieren, usw.

Der Server 5 kann auch verwendet werden, um Mitteilungen an alle Mitglieder einer Interessengruppe zu senden.

## Patentansprüche

1. Verfahren, um Mitglieder (1) einer gemeinsamen Interessengruppe mit einem Mobilgerät zu finden, **dadurch gekennzeichnet, dass**
mindestens eine Datenbank (50) gebildet wird, in weicher eine Vielzahl von Interessengruppen gespeichert sind, wobei diese Interessengruppen Benutzer von Endgeräten umfassen, wobei die Datenbank in mindestens einem aus einem Funknetz (3) erreichbaren Server (5) abgelegt ist,
dass eine Meldung vom Server (5) an mindestens ein Mitglied (1) gesendet wird, wenn es sich in einem bestimmten Abstand eines anderen Mitglieds einer gemeinsamen Interessengruppe befindet,
und dass die Sendung der benannten Meldung und/oder die Registrierung in einer benannten Interessengruppe vom Verwalter des benannten Servers (5) verrechnet wird.

2. Verfahren gemäss dem vorhergehenden Anspruch, **dadurch gekennzeichnet, dass** Standortbestimmungsmittel (5t) vorgesehen sind, die den Standort einer Vielzahl von Mitgliedern (1) überwachen,
und dass die benannte Meldung vom benannten Server (5) vorbereitet wird, wenn er auf Basis der Ergebnisse der benannten Standortbestimmungsmittel feststellt, dass sich zwei Mitglieder derselben Interessengruppe in der Nähe voneinander befinden.

3. Verfahren gemäss dem vorhergehenden Anspruch, **dadurch gekennzeichnet, dass** die benannten Standortbestimmungsmittel (51) den Standort von Mitgliedern mit Signalen aus einem Standortbestimmungssatellit ermitteln.

4. Verfahren gemäss dem Anspruch 2, in welchem die benannten Standortbestimmungsmittel (51) den Standort von Mitgliedern im Funknetz (3) ermitteln.

5. Verfahren gemäss einem der vorhergehenden Ansprüche, **dadurch gekennzeichnet, dass** die benannte Meldung als SMS-Meldung gesendet wird.

6. Verfahren gemäss einem der vorhergehenden Ansprüche, **dadurch gekennzeichnet, dass** die benannte Meldung als USSD-Meldung gesendet wird.

7. Verfahren gemäss einem der vorhergehenden Ansprüche, **dadurch gekennzeichnet, dass** die benannte Meldung als GPRS-Paket gesendet wird.

8. Verfahren gemäss einem der vorhergehenden Ansprüche, **dadurch gekennzeichnet, dass** die benannte Meldung als IP-Paket gesendet wird.

9. Verfahren gemäss einem der vorhergehenden Ansprüche, **dadurch gekennzeichnet, dass** die benannte Meldung als E-Mail gesendet wird.

10. Verfahren gemäss einem der vorhergehenden Ansprüche, **dadurch gekennzeichnet, dass** gewisse Mitglieder bestimmen, dass Ihnen jedes Mal eine Meldung gesendet werden soll, wenn sich ein Mitglied einer gemeinsamen Interessengruppe in der Nähe befindet.

11. Verfahren gemäss einem der vorhergehenden Ansprüche, **dadurch gekennzeichnet, dass** gewisse Mitglieder bestimmen, dass sie Meldungen nur dann erhalten wollen, wenn sie eine spezielle Anfrage an den benannten Server (5) senden.

12. Verfahren gemäss dem Anspruch 1, **dadurch gekennzeichnet, dass** mindestens gewisse Mobilgeräte über eine kontaktlose Schnittstelle (18) im Nahbereich verfügen,
und dass diese Mobilgeräte die benannte Meldung über die benannte kontaktlose Schnittstelle senden, sobald sie ein anderes Mobilgerät in der Umgebung finden welches einem Mitglied einer gemeinsamen Interessengruppe gehört.

13. Verfahren gemäss einem der vorhergehenden Ansprüche, **dadurch gekennzeichnet, dass** die Mitglieder sich selbst in einer Interessengruppe registrieren können.

14. Verfahren gemäss dem vorhergehenden Anspruch, **dadurch gekennzeichnet, dass** sich die Mitglieder mit Ihrem Mobilgerät in einer Interessengruppe registrieren können.

15. Verfahren gemäss dem vorhergehenden Anspruch, **dadurch gekennzeichnet, dass** sich die Mitglieder mit einer mit Ihrem Mobilgerät vorbereiteten Registrierungsmeldung in einer Interessengruppe registrieren können.

16. Verfahren gemäss dem Anspruch 13, **dadurch gekennzeichnet, dass** sich die Mitglieder mit einer Sprachmeldung registrieren können.

17. Verfahren gemäss dem Anspruch 12, **dadurch gekennzeichnet, dass** sich die Mitglieder durch Interner (4) in einer Interessengruppe registrieren können.

18. Verfahren gemäss einem der vorhergehenden Ansprüche, **dadurch gekennzeichnet, dass** Dritte Mitglieder in einer Interessengruppe registrieren.

19. Verfahren gemäss einem der vorhergehenden Ansprüche, **dadurch gekennzeichnet, dass** die Zugehörigkeit zu einer Gruppe zertifiziert wird.

20. Verfahren gemäss einem der vorhergehenden Ansprüche, **dadurch gekennzeichnet, dass** die Zugehörigkeit zu einer Gruppe durch Drittparteien zertifiziert wird.

21. Verfahren gemäss dem vorhergehenden Anspruch, **dadurch gekennzeichnet, dass** Dritte ein Registrierungszertifikat in der benannten Datenbank (50) ablegen.

22. Verfahren gemäss dem vorhergehenden Anspruch, **dadurch gekennzeichnet, dass** Dritte ein Registrierungsrertifikat (13) im Mobilgerät (1) der benannten Mitglieder ablegen.

23. Verfahren gemäss einem der vorhergehenden Ansprüche, **dadurch gekennzeichnet, dass** mindestens gewisse Mitglieder nur temporär in einer Interessengruppe registriert sind.

24. Verfahren gemäss dem vorhergehenden Anspruch, **dadurch gekennzeichnet, dass** die Registrierung zeitlich begrenzt wird.

25. Verfahren gemäss einem der vorhergehenden Ansprüche, **dadurch gekennzeichnet, dass** die benannte Datenbank (50) vom Betreiber des benannten Funknetzes (3) verwaltet wird,
und dass die Registrierung in einer Gruppe und/oder die Sendung einer benannten Meldung vom benannten Betreiber verrechnet wird.

26. Verfahren gemäss einem der Ansprüche 1 bis 24, **dadurch gekennzeichnet, dass** die benannte Datenbank (50) von Drittparteien verwaltet wird.

27. Verfahren gemäss einem der vorhergehenden Ansprüche, **dadurch gekennzeichnet, dass** die benannte Meldung elektronisch signiert wird.

28. Verfahren gemäss einem der vorhergehenden Ansprüche, **dadurch gekennzeichnet, dass** die benannte Meldung elektronisch verschlüsselt wird.

29. Verfahren gemäss einem der vorhergehenden Ansprüche, **dadurch gekennzeichnet, dass** der maximale Abstand zwischen Mitgliedern einer gemeinsamen Interessengruppe zur Sendung der benannten Meldung vom Manager der benannten Interessengruppe bestimmt wird.

30. Verfahren gemäss einem der vorhergehenden Ansprüche, **dadurch gekennzeichnet, dass** der maximale Abstand zwischen Mitgliedern einer gemeinsamen Interessengruppe zur Sendung der benannten Meldung vom benannten Mitglied bestimmt wird.

31. Verfahren gemäss einem der vorhergehenden Ansprüche, **dadurch gekennzeichnet, dass** gewisse Mitglieder temporär verhindern, dass Ihnen Meldungen über die Anwesenheit von Mitglieden einer gemeinsamen Interessengruppe gesendet werden.

32. Verfahren gemäss einem der vorhergehenden Ansprüche, **dadurch gekennzeichnet, dass** gewisse Mitglieder temporär verhindern, dass Meldungen über ihren momentanen Standort an andere Mitglieder einer gemeinsamen Interessengruppe gesendet werden.

33. Verfahren gemäss einem der vorhergehenden Ansprüche, **dadurch gekennzeichnet, dass** die benannte Meldung Identifizierungsmerkmale enthält, die eine Identifizierung des benannten Mitglieds in der Nähe ermöglichen.

34. Verfahren gemäss einem der vorhergehenden Ansprüche, **dadurch gekennzeichnet, dass** die benannte Meldung die Telefonnummer des benannten Mitglieds in der Nähe enthält.

35. Verfahren gemäss dem vorhergehenden Anspruch, **dadurch gekennzeichnet, dass** die benannte Telefonnummer nicht angezeigt wird.

36. Verfahren gemäss einem der Ansprüche 34 oder 35, **dadurch gekennzeichnet, dass** das Mitglied das eine benannte Meldung erhalten hat eine Verbindung mit dem benannten Mitglied einer gemeinsamen Gruppe aufbauen kann, ohne die Telefonnummer dieses Mitglieds einzutippen.

37. Verfahren gemäss einem der vorhergehenden Ansprüche, **dadurch gekennzeichnet, dass** die benannte Meldung eine Identifizierung des benannten Teilnehmers enthält, die für eine Verbindung über eine kontaktlose Schnittstelle im Nahbereich notwendig ist.

38. Verfahren gemäss dem vorhergehenden Anspruch, **dadurch gekennzeichnet, dass** die benannte kontaktlose Schnittstelle (18) im Nahbereich eine Bluetooth-Schnittstelle ist.

39. Verfahren gemäss einem der Ansprüche 37 bis 38, **dadurch gekennzeichnet, dass** sich das benannte Mitglied das eine benannte Meldung erhalten hat direkt über die benannte kontaktlose Schnittstelle (18) mit dem benannten Mitglied in der Nähe verbindet.

## Claims

1. Method for finding members (1) of a common interest group with a mobile device, **characterized in that**
at least one database (50) is built in which a plurality of interest groups are stored, these interest groups comprising users of terminals, the database being stored in at least one server (5) accessible from within a radio network (3),
**in that** a message is sent by the server (5) to at least one member (1) if he is at a certain distance of another member of a common interest group,
and **in that** the sending of said message and/or the registration in one said interest group is billed by the administrator of said server (5).

2. Method according to the preceding claim, **characterized in that** location determining means (51) are provided that monitor the location of a plurality of members (1),
and **in that** said message is prepared by said server (5) if it recognizes on the basis of the results of said location determining means that two members of the same interest group are in each other's vicinity.

3. Method according to the preceding claim, **characterized in that** said location determining means (51) determine the location of members through signals from a location determining satellite.

4. Method according to claim 2, wherein said location determining means (51) determine the location of members in the radio network (3).

5. Method according to one of the preceding claims, **characterized in that** said message is sent as an SMS message.

6. Method according to one of the preceding claims, **characterized in that** said message is sent as an USSD message.

7. Method according to one of the preceding claims, **characterized in that** said message is sent as a GPRS packet.

8. Method according to one of the preceding claims, **characterized in that** said message is sent as an IP packet.

9. Method according to one of the preceding claims, **characterized in that** said message is sent as an e-mail.

10. Method according to one of the preceding claims, **characterized in that** certain members decide that a message should be sent to them each time a member of a common interest group is nearby.

11. Method according to one of the preceding claims, **characterized in that** certain members decide that they want to receive messages only when they send a specific demand to said server (5).

12. Method according to claim 1, **characterized in that** at least certain mobile devices contain a close-range contactless interface (18),
and **in that** these mobile devices send said message over said contactless interface as soon as they find another mobile device in the vicinity belonging to a member of a common interest group.

13. Method according to one of the preceding claims, **characterized in that** the members can self-register in an interest group.

14. Method according to the preceding claim, **characterized in that** the members can register with an interest group with their mobile devices.

15. Method according to the preceding claim, **characterized in that** the members can register with an interest group with a registration message prepared with their mobile devices.

16. Method according to claim 13, **characterized in that** the members can register with a voice message.

17. Method according to claim 12, **characterized in that** the members can register with a interest group by Internet (4).

18. Method according to one of the preceding claims, **characterized in that** third parties register members with an interest group.

19. Method according to one of the preceding claims, **characterized in that** membership with a group is certified.

20. Method according to one of the preceding claims, **characterized in that** membership with a group is certified by third parties.

21. Method according to the preceding claim, **characterized in that** third parties file a registration certificate in said database (50).

22. Method according to the preceding claim, **characterized in that** third parties file a registration certificate (13) in the mobile device (1) of said members.

23. Method according to one of the preceding claims, **characterized in that** at least certain members are only registered temporarily in an interest group.

24. Method according to the preceding claim, **characterized in that** the membership is time-limited.

25. Method according to one of the preceding claims, **characterized in that** said database (50) is administered by the operator of said radio network (3),
and **in that** the registration in a group and/or the sending of a said message is billed by said operator.

26. Method according to one of the claims 1 to 24, **characterized in that** said database is administered by third parties.

27. Method according to one of the preceding claims, **characterized in that** said message is electronically signed.

28. Method according to one of the preceding claims, **characterized in that** said message is electronically encrypted.

29. Method according to one of the preceding claims, **characterized in that** the maximum distance between the members of a common interest group for sending said message is determined by the manager of said interest group.

30. Method according to one of the preceding claims, **characterized in that** the maximum distance between the members of a common interest group for sending said message is determined by said member.

31. Method according to one of the preceding claims, **characterized in that** certain members temporarily prevent messages about the presence of members of common interest groups from being sent to them.

32. Method according to one of the preceding claims, **characterized in that** certain members temporarily prevent messages about their present location to other members of common interest groups from being sent to them.

33. Method according to one of the preceding claims, **characterized in that** said message contains identification characteristics that enable the identification of said nearby member.

34. Method according to one of the preceding claims, **characterized in that** said message contains the telephone number of said nearby member.

35. Method according to the preceding claim, **characterized in that** said telephone number is not displayed.

36. Method according to one of the claims 34 or 35, **characterized in that** the member, having received a said message, can build a connection with said member of a common interest group without typing this member's telephone number.

37. Method according to one of the preceding claims, **characterized in that** said message contains an identification of said participant that is necessary for a connection over the close-range contactless interface.

38. Method according to the preceding claim, **characterized in that** said close-range contactless interface (18) is a Bluetooth interface.

39. Method according to one of the claims 37 to 38, **characterized in that** said member that has received said message can build a direct connection with said nearby member over said contactless interface (18).

## Revendications

1. Procédé pour trouver les membres d'un groupe d'intérêt commun à l'aide d'un terminal mobile, **caractérisé en ce que**
au moins une banque de données (50) est constituée dans laquelle une pluralité de groupes d'intérêts sont mémorisés, la banque de données étant stockée dans au moins un serveur (5) accessible depuis un réseau radio (3),
**en ce qu'**un message du serveur (5) est envoyé à au moins un membre (1) lorsqu'il se trouve à une distance déterminée d'un autre membre d'un même groupe d'intérêt,
et **en ce que** l'envoi dudit message et/ou l'enregistrement dans un dit groupe d'intérêt est facturé par l'administrateur dudit serveur (5).

2. Procédé selon la revendication précédente, **caractérisé en ce que** des moyens de localisation (51) sont prévus qui surveillent l'emplacement d'une pluralité de membres (1),
et **en ce que** ledit message est préparé par ledit serveur (5) lorsqu'il est constaté sur la base des résultats desdits moyens de localisation que deux membres du même groupe d'intérêt se trouvent à proximité l'un de l'autre.

3. Procédé selon la revendication précédente, **caractérisé en ce que** lesdits moyens de localisation (51) déterminent l'emplacement de membres à l'aide de signaux d'un satellite de localisation.

4. Procédé selon la revendication 2, **caractérisé en ce que** lesdits moyens de localisation (51) déterminent l'emplacement de membres à l'aide dudit réseau radio (3).

5. Procédé selon l'une des revendications précédentes, **caractérisé en ce que** ledit message est envoyé comme SMS.

6. Procédé selon l'une des revendications précédentes, **caractérisé en ce que** ledit message est envoyé comme USSD.

7. Procédé selon l'une des revendications précédentes, **caractérisé en ce que** ledit message est envoyé comme paquet GPRS.

8. Procédé selon l'une des revendications précédentes, **caractérisé en ce que** ledit message est envoyé comme paquet IP.

9. Procédé selon l'une des revendications précédentes, **caractérisé en ce que** ledit message est envoyé comme e-mail.

10. Procédé selon l'une des revendications précédentes, **caractérisé en ce que** certains membres déterminent qu'un message doit leur être envoyé à chaque fois qu'un membre d'un même groupe d'intérêt se trouve à proximité.

11. Procédé selon l'une des revendications précédentes, **caractérisé en ce que** certains membres déterminent qu'ils ne veulent recevoir des messages que lorsqu'ils envoient une requête spéciale audit serveur (5).

12. Procédé selon la revendication 1, **caractérisé en ce qu'**au moins certains terminaux mobiles disposent d'une interface sans fil (18) de proximité,
et **en ce que** ces terminaux mobiles envoient un message au travers de ladite interface sans fil dès qu'un autre terminal mobile appartenant à un même groupe d'intérêt se trouve dans la région.

13. Procédé selon l'une des revendications précédentes, **caractérisé en ce que** les membres peuvent s'inscrire eux-mêmes dans un groupe d'intérêt.

14. Procédé selon la revendication précédente, **caractérisé en ce que** les membres peuvent s'inscrire à l'aide de leur terminal mobile dans un groupe d'intérêt.

15. Procédé selon la revendication précédente, **caractérisé en ce que** les membres peuvent s'inscrire dans un groupe d'intérêt à l'aide d'un message d'inscription préparé avec leur terminal mobile.

16. Procédé selon la revendication 13, **caractérisé en ce que** les membres peuvent s'inscrire à l'aide d'un message vocal dans un groupe d'intérêt.

17. Procédé selon la revendication 12, **caractérisé en ce que** les membres peuvent s'inscrire au travers d'Internet dans un groupe d'intérêt.

18. Procédé selon l'une des revendications précédentes, **caractérisé en ce que** des tiers peuvent inscrire des membres dans un groupe d'intérêt.

19. Procédé selon l'une des revendications précédentes, **caractérisé en ce que** l'appartenance à un groupe d'intérêt est certifiée.

20. Procédé selon l'une des revendications précédentes, **caractérisé en ce que** l'appartenance à un groupe d'intérêt est certifiée par des tierces parties.

21. Procédé selon la revendication précédente, **caractérisé en ce que** des tiers déposent un certificat d'inscription dans ladite banque de données (50).

22. Procédé selon la revendication précédente, **caractérisé en ce que** des tiers déposent un certificat d'inscription (13) dans le terminal mobile desdits membres.

23. Procédé selon l'une des revendications précédentes, **caractérisé en ce qu'**au moins certains membres ne sont inscrits que temporairement dans un groupe d'intérêt.

24. Procédé selon la revendication précédente, **caractérisé en ce que** l'inscription est limitée dans le temps.

25. Procédé selon l'une des revendications précédentes, **caractérisé en ce que** ladite banque de données (50) est administrée par l'administrateur dudit réseau radio (3),
et **en ce que** l'inscription dans un groupe d'intérêt et/ou l'envoi d'un message est facturé par ledit administrateur.

26. Procédé selon l'une des revendications 1 à 24, **caractérisé en ce que** ladite banque de données (50) est administrée par des tierces parties.

27. Procédé selon l'une des revendications précédentes, **caractérisé en ce que** ledit message est signé électroniquement.

28. Procédé selon l'une des revendications précédentes, **caractérisé en ce que** ledit message est encrypté électroniquement.

29. Procédé selon l'une des revendications précédentes, **caractérisé en ce que** la distance maximale entre membres d'un même groupe d'intérêt pour l'envoi dudit message est déterminée par le gérant dudit groupe d'intérêt.

30. Procédé selon l'une des revendications précédentes, **caractérisé en ce que** la distance maximale entre membres d'un même groupe d'intérêt pour l'envoi dudit message est déterminée par ledit membre.

31. Procédé selon l'une des revendications précédentes, **caractérisé en ce que** certains membres empêchent temporairement que des messages au sujet de la présence de membres de groupes d'intérêts communs leurs soient envoyés.

32. Procédé selon l'une des revendications précédentes, **caractérisé en ce que** certains membres empêchent temporairement que des messages à propos de leur emplacement momentané soient envoyés à d'autres membres d'un groupe d'intérêt commun.

33. Procédé selon l'une des revendications précédentes, **caractérisé en ce que** ledit message contient des caractéristiques d'identification qui rendent possible une identification dudit membre à proximité.

34. Procédé selon l'une des revendications précédentes, **caractérisé en ce que** ledit message contient le numéro de téléphone dudit membre à proximité.

35. Procédé selon la revendication précédente, dans lequel ledit numéro de téléphone n'est pas affiché.

36. Procédé selon l'une des revendications 34 ou 35, **caractérisé en ce qu'**un membre qui a reçu un dit message peut établir une communication avec ledit membre d'un groupe d'intérêt commun sans taper le numéro de téléphone de ce membre.

37. Procédé selon l'une des revendications précédentes, **caractérisé en ce que** ledit message contient une identification dudit participant nécessaire pour l'établissement d'une communication au travers d'une interface sans fil de proximité.

38. Procédé selon la revendication précédente, **caractérisé en ce que** ladit interface sans fil de proximité (18) est une interface Bluetooth

39. Procédé selon l'une des revendications 37 à 38, **caractérisé en ce que** ledit membre qui a reçu un dit message se connecte directement au travers de ladite interface sans contact (18) avec ledit membre à proximité.
